# EUROPÄISCHE PATENTANMELDUNG

(11) **EP 4 455 503 A1**
(43) Veröffentlichungstag der Anmeldung: **30.10.2024**
(21) Anmeldenummer: 24171762.8
(22) Anmeldetag: 22.04.2024
(51) Int. Cl.: F16D 55/224, F16D 65/18, F16D 125/48, F16D 125/40, F16D 121/24

(54) **ELEKTROMECHANISCHER BREMSAKTUATOR**

(30) Priorität: 24.04.2023 DE 102023203740
(71) Anmelder: KES Keschwari Electronic Systems GmbH & Co. KG, 30890 Barsinghausen (DE)
(72) Erfinder: Keschwari Rasti, Mahmud, 30890 Barsinghausen (DE); Kosch, Klaus-Georg, Dr., 30559 Hannover (DE); Rathjen, Frauke, 30453 Hannover (DE)
(74) Vertreter: Taruttis, Stefan Georg

(57) **Zusammenfassung**

Bremsaktuator mit rein elektrischem Antrieb zur Verwendung an einer Bremszange, insbesondere für Schienenfahrzeuge, mit

- einer Gewindespindel (2), deren erstes Ende (3) mit einer Bremszange verbindbar ist und deren gegenüberliegendes zweites Ende (4) längsverschieblich in einem Gehäuse (1) geführt ist,

- ein mit der Gewindespindel (2) in Eingriff stehendes erstes Antriebszahnrad (7), das drehbar und ortsfest im Gehäuse (1) gelagert ist,

- ein mit der Gewindespindel (2) in Eingriff stehendes zweites Antriebszahnrad (14),

- mit zumindest einem ersten Getriebe (19), das den zumindest einen Elektromotor (11) mit dem ersten Antriebszahnrad (7) verbindet und

- mit einem zweiten Getriebe (20), das den zumindest einen Elektromotor (11) mit dem zweiten Antriebszahnrad (14) verbindet.

## Beschreibung

Die vorliegende Erfindung betrifft einen elektromechanischen Aktuator, insbesondere einen Bremsaktuator, der z.B. zwischen den Armen einer Bremszange oder eines Bremssattels angebracht sein kann, insbesondere für Schienenfahrzeuge.

Der Bremsaktuator zeichnet sich durch einen rein elektrischen Antrieb aus, der ein schnelles Schließen einer Bremse und anschließendes Anlegen einer Bremskraft ermöglicht. Der rein elektrische Antrieb kann aus zumindest einem Elektromotor, insbesondere genau einem Elektromotor, oder zwei Elektromotoren bestehen. Bevorzugt weist der Bremsaktuator keine Feder auf, die als Krafterzeuger dient, und keinen Bremskolben oder Bremszylinder.

Der Bremsaktuator hat den Vorteil, insbesondere wenn er einen Wegaufnehmer aufweist, eine Verschleißnachstellung zu ermöglichen.

Die DE 197 19 510 A1 zeigt einen Aktuator für eine Bremse mit einem Elektromotor, der einen Läufer antreibt, mit dem sowohl ein Getriebe Z3/Z4, das eine Spindel über eine Keilnutwelle dreht, als auch ein Getriebe Z1/Z2 fest gekoppelt sind, das eine auf die Spindel wirkende Spindelmutter dreht.

Die US 4,649,329 A zeigt einen Aktuator mit einer in zwei Abschnitte unterteilten Spindel, zwischen denen eine Druckfeder angeordnet ist. Jeder Abschnitt der Spindel ist drehfest am Gehäuse geführt. Der eine Abschnitt der Spindel wird von einer Spindelmutter angetrieben, eine weitere Spindelmutter treibt den anderen Abschnitt der Spindel an.

Die DE 199 26 432 A1 zeigt einen elektromechanischen Bremsaktuator mit einem Getriebe, das eine Spindelmutter auf einer Spindel antreibt, mit einer schaltbaren Kupplung zwischen dem Motor und dem Getriebe.

Die US 4,589,531 A zeigt einen Bremsaktuator, der einen Elektromotor mit Getriebe zum Drehen einer Spindel hat, auf der eine Spindelmutter sitzt, die eine Feder gegen eine in der Achse der Spindel liegende Stange zusammendrückt, bis eine gewünschte Bremskraft auf die Stange wirkt. Ein zweiter Elektromotor spannt eine zweite Feder zwischen einer Gehäusewand und einem Flansch vor, der gegen eine Mutter, die auf der Stange sitzt, drücken kann, um Bremskraft auszuüben.

Der Erfindung stellt sich die Aufgabe, einen alternativen Bremsaktuator bereitzustellen, der bevorzugt nur zumindest einen Elektromotor als Antrieb aufweist. Weiter bevorzugt soll der Bremsaktuator für ein schnelles Schließen der Bremse und anschließendes Aufbringen einer Bremskraft eingerichtet sein.

Die Erfindung löst die Aufgabe mit den Merkmalen der Ansprüche und insbesondere mittels eines Bremsaktuators, insbesondere als Antrieb für eine Betriebsbremse, der
- genau eine in einem Gehäuse längsverschieblich angeordnete Gewindespindel, deren erstes Ende mit einer Bremszange verbindbar ist und deren gegenüberliegendes zweites Ende bevorzugt längsverschieblich an einem Gehäuse geführt ist,
- ein mit der Gewindespindel in Eingriff stehendes erstes Antriebszahnrad, das drehbar und ortsfest im Gehäuse gelagert ist,
- ein mit der Gewindespindel in Eingriff stehendes zweites Antriebszahnrad, das drehbar und ortsfest im Gehäuse gelagert ist,
- bevorzugt mit einem Kraftaufnehmer, der eingerichtet ist, die Kraft zwischen dem ersten Antriebszahnrad und dem Gehäuse aufzunehmen,
- mit zumindest einem ersten Getriebe, das den zumindest einen Elektromotor mit dem ersten Antriebszahnrad verbindet und mit einem zweiten Getriebe, das zumindest einen Elektromotor mit dem zweiten Antriebszahnrad verbindet,
- bevorzugt mit einem Wegaufnehmer, der eingerichtet ist, den Weg der Verschiebung der Gewindespindel gegen das Gehäuse aufzunehmen,
aufweist oder daraus besteht.

Der erfindungsgemäße Aktuator weist einen rein elektromechanischen Antrieb auf, der bevorzugt aus genau einem Elektromotor oder aus zwei Elektromotoren besteht. Optional weist der Aktuator einen manuell zu betätigenden Antrieb und/oder einen zusätzlichen Elektromotor auf, der eine Notlösevorrichtung antreibt und eingerichtet ist, die Gewindespindel in das Gehäuse bzw. in Richtung auf ihr zweites Ende zu bewegen. Dabei kann der zusätzliche Elektromotor einen Antrieb für eine Notlösevorrichtung oder Lösevorrichtung zur Wartung bilden, wobei der zusätzliche Elektromotor bevorzugt über einen Taster am Gehäuse zu steuern ist und von einer Batterie angetrieben sein kann, die optional und bevorzugt in demselben Gehäuse angeordnet ist wie der Bremsaktuator.

Eine Bremszange weist zwei gegeneinander verschwenkbar angelenkte Arme auf. Der Bremsaktuator ist zwischen den Enden der Arme angelenkt. An den gegenüberliegenden Enden der Arme befinden sich Bremsbelaghalter mit Bremsbelägen. Für die Zwecke der Erfindung wird ein Bremssattel stellvertretend als Bremszange bezeichnet und eine Bremszange kann von einem Bremssattel gebildet werden, wobei der Bremsaktuator z.B. zwischen einem Bereich des Bremssattels und einem vom Bremssattel umfassten Bremsbelag angeordnet sein kann.

Die Gewindespindel ist bevorzugt eine eingängige Trapezgewindespindel, da diese im Ruhezustand selbsthemmend ist, d.h. das Einleiten einer axialen Belastung führt nicht zur Drehung der Spindel, so dass z.B. eine anliegende Anpresskraft im Ruhezustand erhalten bleibt, insbesondere ohne dass der Aktuator eine zusätzliche Arretiervorrichtung aufweist. Daher kann der Bremsaktuator eingerichtet sein, auch ohne Beaufschlagen eines Elektromotors mit Strom und insbesondere ohne dass der Aktuator eine Arretiervorrichtung aufweist, z.B. der Aktuator keine Feder und/oder keinen Bremskolben aufweist, die Bremse im angelegten Zustand zu blockieren, z.B. als Feststellbremse als zusätzlicher Funktion.

Im Gehäuse ist die Gewindespindel mittels des ersten Antriebszahnrads und des zweiten Antriebszahnrads geführt. Das erste Antriebszahnrad und das zweite Antriebszahnrad sind ortsfest im Gehäuse um die eigene Achse drehbar gelagert. Optional kann das Gehäuse offen sein und z.B. aus einem Träger bestehen, wobei das erste und das zweite Antriebszahnrad am Träger gelagert sind. Bevorzugt sind der zumindest eine Elektromotor und das Getriebe zwischen diesem und dem ersten und dem zweiten Antriebszahnrad mit dem Träger verbunden, um die Antriebszahnräder gegen das Gehäuse bzw. gegen den Träger anzutreiben. Bevorzugt umfasst das Gehäuse den zumindest einen Elektromotor, ein Getriebe, das den zumindest einen Elektromotor mit dem ersten Antriebszahnrad koppelt und ein Getriebe, das den zumindest einen Elektromotor mit dem zweiten Antriebszahnrad koppelt, das erste und das zweite Antriebszahnrad und die Gewindespindel, deren erstes Ende aus einer Öffnung des Gehäuses ragt, optional mit einer Abdeckung, z.B. von einem Faltenbalg gebildet, an der Öffnung des Gehäuses. Generell ist der zumindest eine Elektromotor bevorzugt ein Gleichstrommotor, insbesondere mit einem Motorgetriebe, das den Elektromotor mit der Antriebswelle koppelt.

Generell bevorzugt ist das zweite Antriebszahnrad entlang der Gewindespindel zwischen deren erstem Ende und dem ersten Antriebszahnrad angeordnet, und entsprechend ist das erste Antriebszahnrad entlang der Gewindespindel bevorzugt zwischen dem zweiten Antriebszahnrad und dem zweiten Ende der Gewindespindel angeordnet.

Generell bevorzugt sind die Drehachsen aller Getriebeelemente und die Drehachse der Welle des genau einen Elektromotors, optional die Drehachsen der Wellen der zwei Elektromotoren, parallel zur Längsachse, auch als Drehachse bezeichnet, der Gewindespindel angeordnet.

Bevorzugt sind das erste Antriebszahnrad und die zweite Antriebszahnrad jeweils mittels eines Getriebes mit genau einem Elektromotor verbunden, wobei weiter bevorzugt beide Getriebe von einer gemeinsamen Antriebswelle angetrieben sind, die von dem genau einen Elektromotor angetrieben ist.

Generell bevorzugt ist das erste Antriebszahnrad eine Spindelmutter, die im Gewindeeingriff mit der Gewindespindel steht und einen Gewindetrieb für die Gewindespindel bildet, die optional zumindest in einem Betriebszustand drehfest geführt ist. Dabei kann die Gewindespindel mittels des zweiten Antriebszahnrads drehfest geführt sein, wobei das zweite Antriebszahnrad ein Stegritzel ist, das zumindest einen innenliegenden Steg aufweist, der drehfest in eine längs der Gewindespindel laufende Nut eingreift. Alternativ kann die Gewindespindel drehfest und längsverschieblich geführt sein, z.B. mittels drehfester Verbindung ihres zweiten Endes mit einer Bremszange oder drehfest und längsverschieblich am Gehäuse geführt sein. Dabei kann die Gewindespindel z.B. dadurch drehfest und längsverschieblich am Gehäuse geführt sein, dass sie in einem Abschnitt zwischen ihrem zweiten Ende und dem ersten Antriebszahnrad oder in einem Abschnitt, der durch eine Öffnung des Gehäuses tritt, drehfest und längsverschieblich geführt ist, z.B. mittels einer längs der Spindel verlaufenden Nut und eines darin eingreifenden, am Gehäuse festgelegten Stegs, z.B. in Form einer Steghülse. Alternativ kann die Gewindespindel generell durch drehfeste Anlenkung an einer Bremszange drehfest sein.

In einer ersten Ausführungsform wird das erste Antriebszahnrad von einer Spindelmutter gebildet, auch als erste Spindelmutter bezeichnet, und das zweite Wellenzahnrad wird von einem Stegritzel gebildet, das zumindest einen innenliegenden Steg aufweist, der drehfest in zumindest eine längs der Gewindespindel laufende Nut eingreift, wobei die Gewindespindel entlang der Nut an dem darin eingreifenden Steg verschieblich geführt ist. Die zumindest eine längs der Gewindespindel laufende Nut kreuzt das Gewinde der Gewindespindel und erstreckt sich bevorzugt bis in den Kernquerschnitt der Gewindespindel. Die zumindest eine längs der Gewindespindel laufende Nut kann sich achsparallel entlang der Gewindespindel erstrecken oder gradlinig oder gebogen in einem Winkel zur Längsachse der Gewindespindel, z.B. in einem Winkel von maximal 20°, maximal 15°, maximal 10° oder maximal 5° zur Längsachse der Gewindespindel.

Das erste Getriebe koppelt den zumindest einen Elektromotor mit der ersten Spindelmutter, so dass bei Drehung der ersten Spindelmutter die Gewindespindel entlang ihrer zumindest einen Nut längs entlang des Stegs des Stegritzels verschoben wird, insbesondere wenn das Stegritzel in einem Betriebszustand ist, in dem es relativ zur Gewindespindel steht oder langsamer als diese in der Drehrichtung der ersten Spindelmutter dreht. In diesem Betriebszustand bildet das Stegritzel eine Führung, die sich entgegen der Drehrichtung der ersten Spindelmutter und schneller als diese dreht, bevorzugt eine drehfeste Führung für die Gewindespindel, in der die Gewindespindel längsverschieblich geführt ist. Bei Drehung der ersten Spindelmutter wird die Gewindespindel in dem Stegritzel zumindest relativ zum Stegritzel drehfest und längsverschieblich geführt, so dass die erste Spindelmutter einen Gewindetrieb mit der Gewindespindel bildet. Der Betriebszustand, in dem das Stegritzel eine zumindest relativ zur ersten Spindelmutter drehfeste Führung für die Gewindespindel bildet wird dadurch eingestellt, dass das zweite Getriebe, das einen Elektromotor mit dem Stegritzel koppelt, das Stegritzel im gegenläufigen Drehsinn zur ersten Spindelmutter und bevorzugt schneller als die erste Spindelmutter dreht. Bevorzugt ist das erste Getriebe gegenläufig zum zweiten Getriebe, und entsprechend ist das erste Getriebe eingerichtet, das Stegritzel gegenläufig zur ersten Spindelmutter anzutreiben. Im Verhältnis zum zweiten Getriebe ist generell das erste Getriebe mit der ersten Spindelmutter eingerichtet, die Gewindespindel mit größerer Kraft und geringerer Geschwindigkeit entlang ihrer Längsachse zu bewegen. Das zweite Getriebe ist durch den Eingriff des Stegritzels in eine Nut längs der Gewindespindel eingerichtet, die Gewindespindel direkt zu drehen und daher die Gewindespindel mit größerer Geschwindigkeit und geringerer Kraft als das erste Getriebe entlang ihrer Längsachse zu bewegen, wobei die Gewindespindel in der ersten Spindelmutter gedreht wird. In der ersten Ausführungsform ist, wie in jeder erfindungsgemäßen Ausführungsform, das zweite Getriebe eingerichtet, die Gewindespindel schnell bzw. innerhalb kurzer Zeit zu bewegen, um eine Bremszange schnell zu schließen, während das erste Getriebe eingerichtet ist, die Gewindespindel mit großer Kraft zu bewegen, um eine Bremskraft auf die Bremszange aufzubringen. Dabei hat das erste Getriebe durch das erste Antriebszahnrad, das z.B. die erste Spindelmutter bildet, den weiteren Vorteil, eine genaue Dosierung der Bremskraft zu erlauben.

In jeder Ausführungsform wird die Gewindespindel optional dadurch drehfest gehalten, dass ihr erstes Ende eingerichtet ist, sich drehfest mit einem Arm einer Bremszange zu verbinden, z.B. mittels einer Kupplung zwischen dem ersten Ende der Gewindespindel und einem daran angelenkten Arm einer Bremszange, wobei die Kupplung bei Belastung des ersten Endes der Gewindespindel gegen einen Arm einer Bremszange die Drehung der Gewindespindel bremst oder stoppt. Eine solche Kupplung kann eine Rutschkupplung oder eine formschlüssig eingreifende Kupplung sein, die bei Anpressen der Gewindespindel gegen einen Arm der Bremszange greift und die Drehung der Gewindespindel blockiert, und/oder deren Eingreifen optional gesteuert ist, z.B. abhängig vom Signal eines Kraftsensors, der zwischen der ersten Spindelmutter und dem Gehäuse angeordnet ist und/oder einem Kraftsensor, der zwischen dem ersten Ende der Gewindespindel und dem damit verbundenen Arm der Bremszange angeordnet ist und/oder einem Kraftsensor, der zwischen dem Gehäuse und dem damit verbundenen Arm der Bremszange angeordnet ist. Bevorzugt ist die Kupplung eine Rutschkupplung oder eine schaltbare Kupplung, z.B. eine mechanisch oder elektromechanisch schaltbare Kupplung.

Generell bevorzugt weist das erste Getriebe eine größere Übersetzung auf als das zweite Getriebe, so dass bei gleicher Antriebsdrehzahl, z.B. bei Antrieb beider Getriebe durch genau einen Elektromotor, das erste Getriebe die Gewindespindel zu einer langsameren Bewegung mit größerer Kraft antreibt und das zweite Getriebe die Gewindespindel zu einer schnelleren Bewegung mit kleinerer Kraft antreibt.

In der ersten Ausführungsform weist der Bremsaktuator genau einen Elektromotor auf, der eine Antriebswelle antreibt, mit der sowohl das erste Getriebe als auch das zweite Getriebe angetrieben sind. Bevorzugt weist das erste Getriebe eine größere Übersetzung auf als das zweite Getriebe, so dass die erste Spindelmutter mit kleinerer Drehzahl angetrieben wird als das Stegritzel, und das das Stegritzel mit größerer Drehzahl angetrieben wird, als die erste Spindelmutter. Das erste Getriebe ist bevorzugt eingerichtet, die erste Spindelmutter zur Drehung in entgegengesetzter Richtung zur Drehung des Stegritzels anzutreiben. Dazu kann das erste Getriebe z.B. ein Zahnrad mehr, auch als Umkehrritzel bezeichnet, als das zweite Getriebe aufweisen.

Das zweite Getriebe, das von der Antriebswelle angetrieben wird, kann ein auf der Antriebswelle angebrachtes erstes Wellenritzel, und eine mit diesem kämmende erste Spindelmutter aufweisen oder daraus bestehen. Das zweite Getriebe kann ein zweites Wellenritzel, bevorzugt größer als das erste Wellenritzel, und das damit kämmende Stegritzel aufweisen oder daraus bestehen, wobei bevorzugt die Antriebswelle parallel zur Gewindespindel angeordnet ist. Eines von erstem und zweitem Getriebe weist ein Umkehrritzel auf, um die Drehrichtung von erstem und zweitem Antriebszahnrad gegenläufig einzurichten. Zwischen dem zweiten Stegritzel und der Antriebswelle ist eine Kupplung angeordnet, die bei Belastung der Gewindespindel auf ihr erstes Ende, z.B. bei Schließen der Bremszange bis in eine Geschlossenstellung, die Antriebswelle gegen das zweite Wellenritzel drehen lässt. Die Kupplung kann eine Rutschkupplung, optional schaltbar, sein.

Generell ist die Gewindespindel vom ersten Antriebszahnrad geführt. Die Gewindespindel ist bevorzugt zwischen ihrem ersten Ende und dem zweiten Antriebszahnrad, das in der ersten Ausführungsform von einem Stegritzel gebildet wird, und/oder zwischen dem zweiten Ende der Gewindespindel und dem ersten Antriebszahnrad, das von einer ersten Spindelmutter gebildet werden kann, im Gehäuse längsverschieblich und drehbar geführt, z.B. innerhalb einer zylindrischen Führung, die am Gehäuse angeordnet ist.

Optional ist die Gewindespindel ausschließlich von dem erstem Antriebszahnrad und dem zweiten Antriebszahnrad geführt. Generell bevorzugt ist ein Wegsensor am zweiten Ende der Gewindespindel angeordnet, der eingerichtet ist, den Weg der Gewindespindel entlang ihrer Längsachse aufzunehmen.

Das erste Antriebszahnrad ist generell ortsfest im Gehäuse gelagert, z.B. mit Wälzlagern, die eine Bewegung des ersten Antriebszahnrads entlang der und quer zur Längsachse der Gewindespindel verhindern. Bevorzugt ist generell ein Kraftsensor am Gehäuse angeordnet, der eingerichtet ist, die parallel zur Längsachse der Gewindespindel wirkende Kraft aufzunehmen, die zwischen den ersten Antriebszahnrad und dem Gehäuse auftritt. Ein solcher Kraftsensor kann z.B. zwischen einem Wälzlager, mit dem das erste Antriebszahnrad ortsfest und drehbar am Gehäuse gelagert ist, und dem Gehäuse angeordnet sein.

Das zweite Antriebszahnrad ist generell, auch in der Ausführungsform als Stegritzel, ortsfest im Gehäuse gelagert, z.B. mit Wälzlagern, die eine Bewegung der zweiten Spindelmutter entlang der und quer zur Längsachse der Gewindespindel verhindern.

Jeder Kraftsensor und jeder Wegsensor sind bevorzugt mit einer Steuereinheit verbunden, die eingerichtet ist, die Signale jedes Sensors aufzunehmen und den zumindest einen Elektromotor abhängig von dem Signal zumindest eines Sensors oder jedes Sensors und abhängig von einem Steuersignal für das Schließen oder Öffnen der Bremszange bzw. des Aktuators zu steuern.

Optional weist eine Antriebswelle, die zumindest das erste Getriebe antreibt, z.B. eine Antriebswelle, die sowohl das erste Getriebe als auch das zweite Getriebe antreibt oder eine Antriebswelle, die nur das erste Getriebe antreibt, eine steuerbare Arretiereinrichtung auf, die die Antriebswelle festsetzen kann, z.B. als Feststellbremse in Geschlossenstellung einer Bremszange, die vom Aktuator betätigt wird.

Optional ist eine Arretiereinrichtung an der Gewindespindel angeordnet, die eingerichtet ist, die Gewindespindel festzusetzen, insbesondere eingerichtet ist, die Drehung der Gewindespindel zu blockieren, z.B. als Feststellbremse in Geschlossenstellung einer Bremszange, die vom Bremsaktuator betätigt wird. Optional ist die Gewindespindel eine eingängige Trapezgewindespindel und der Bremsaktuator weist keine Arretiereinrichtung für die Gewindespindel auf.

Bevorzugt ist eine Notlösevorrichtung an der Gewindespindel angeordnet, die betätigt werden kann, um die Gewindespindel bei anliegender Bremskraft, z.B. bei Nichtvorhandensein der Versorgungsspannung oder Funktionsausfall des Elektromotors in einer Geschlossenstellung, in Richtung ihres zweiten Endes zu bewegen. Die Notlösevorrichtung kann z.B. durch einen von außerhalb des Gehäuses manuell zu betätigenden Antrieb gebildet sein, der eingerichtet ist, die Spindel in Drehung zu versetzen, z.B. in Längsnuten der Spindel eingreifen, wie sie z.B. für den Antrieb durch das Stegritzel vorgesehen sind. Weiterhin kann der Aktuator, bevorzugt zur gleichzeitigen Betätigung, eingerichtet sein, die drehfeste Verbindung zwischen dem ersten Ende der Gewindespindel und einer Bremszange, z.B. die drehfeste Verbindung zwischen dem ersten Ende der Gewindespindel mit einem mit der Bremszange verbundenen Stempel, zu lösen. Alternativ kann die Notlösevorrichtung z.B. durch einen manuell zu betätigenden Antrieb gebildet sein, der ein Zahnrad des Getriebes oder eines von erstem und zweiten Antriebszahnrad in Bewegung versetzt, um die Gewindespindel in Richtung auf ihr zweites Ende zu bewegen. In einer Ausführungsform wird die Notlösevorrichtung durch ein Stegritzel gebildet, dessen innenliegender Steg in eine längs der Gewindespindel verlaufende Nut längsverschieblich eingreift, wobei das Stegritzel z.B. manuell antreibbar ist, z.B. mittels eines manuell zu betätigenden Seilantriebs oder Kurbelantriebs, oder das Stegritzel mit einem Elektromotor betätigt wird, der von einer Batterie angetrieben ist, und vorzugsweise mittels eines Tasters zu steuern ist.

In einer Ausführungsform, bei der die Spindel z.B. an ihrem zweiten Ende mit einer Verdrehsicherung versehen ist, kann der manuelle Antrieb so ausgeführt sein, dass die drehfeste Führung der Spindel und dadurch die Gewindespindel in Drehung versetzt wird, um sie in Richtung auf ihr zweites Ende zu bewegen. Dabei kann die drehfeste Führung durch ein als Stegritzel ausgebildetes zweites Antriebszahnrad ausgebildet sein, oder als drehfeste Führung, die am Gehäuse angebracht ist und mittels eines manuellen Antriebs gegen das Gehäuse drehbar ist.

Generell ist bevorzugt, dass das erste Ende der Gewindespindel fest mit einem Stempel verbunden ist, der nur um eine Achse schwenkbar an einer Bremszange angelenkt ist, die senkrecht zur Längsachse der Gewindespindel steht. Bevorzugt ist die Gewindespindel an ihrem zweiten Ende nicht am Gehäuse geführt. Generell bevorzugt ist die Gewindespindel ausschließlich durch das erste Antriebszahnrad und in der Öffnung des Gehäuses geführt, optional auch durch das zweite Antriebszahnrad geführt.

Eine Kupplung kann generell eine Rutschkupplung oder eine schaltbare Kupplung sein, z.B. eine elektromagnetisch oder mechanisch betätigte Schaltkupplung.

Generell bevorzugt ist jeder Elektromotor ein Getriebemotor, dessen Getriebe eine Antriebswelle zur Drehung antreibt.

Elemente, die für die erste Ausführungsform beschrieben sind, können auch Teil der zweiten und dritten Ausführungsform sein, auch wenn für diese alternative Elemente beschrieben sind.

In einer zweiten Ausführungsform sind das erste Getriebe, dessen erstes Antriebszahnrad als erste Spindelmutter in die Gewindespindel eingreift und mit dieser einen Gewindetrieb bildet und das zweite Getriebe, das ein zweites Antriebszahnrad, das eine zweite Spindelmutter ist, antreibt, die in die Gewindespindel eingreift und mit dieser einen zweiten Gewindetrieb bildet, von einer gemeinsamen Antriebswelle angetrieben, die von genau einem Elektromotor angetrieben ist und die bevorzugt parallel zur Gewindespindel angeordnet ist. In dieser Ausführungsform ist die Gewindespindel drehfest und längsverschieblich geführt, bevorzugt durch drehfeste Anlenkung des ersten Endes der Gewindespindel an einer Bremszange, so dass die drehfeste Anlenkung der Gewindespindel an der Bremszange eine Verdrehsicherung bildet. Bevorzugt wird die drehfeste Anlenkung des ersten Endes der Gewindespindel dadurch hergestellt, dass das erste Ende der Gewindespindel ortsfest an einem Stempel angebracht ist, der nur um eine Achse senkrecht zur Gewindespindel schwenkbar an der Bremszange angelenkt ist. Bei drehfester Anlenkung des ersten Endes der Gewindespindel an einer Bremszange, ist das zweite Ende der Gewindespindel bevorzugt frei, so dass die Gewindespindel nur durch ein erstes Antriebszahnrad und in der Öffnung des Gehäuses, durch die sie angeordnet ist, optional auch mittels des zweiten Antriebszahnrads, geführt ist.

Das erste Getriebe hat eine größere Übersetzung als das zweite Getriebe, so dass das erste Getriebe eingerichtet ist, die erste Spindelmutter langsamer zu drehen, als das zweite Getriebe, das eingerichtet ist, die zweite Spindelmutter schneller zu drehen. Die Wellenritzel des ersten und zweiten Getriebes sind mit jeweils einer schaltbaren Kupplung mit der gemeinsamen Antriebswelle verbunden. Bevorzugt ist das erste Wellenritzel mit einer ersten Kupplung mit der Antriebswelle verbunden und das zweite Wellenritzel ist mit einer zweiten Kupplung mit der Antriebswelle verbunden und die erste und zweite Kupplung sind von einer Steuereinheit gesteuert, insbesondere abhängig vom Signal eines Wegsensors, vom Signal eines Kraftsensors und/oder abhängig von einem Steuersignal für das Schließen oder Öffnen der Bremszange bzw. des Bremsaktuators gesteuert. Dabei sind die erste und zweite Kupplung bevorzugt gesteuert, dass nur eine dieser zur Kraftübertragung geschlossen ist und die andere offen ist, z.B. um ein freies Drehen des daran angeschlossenen Getriebes zu erlauben.

In der zweiten Ausführungsform sind das erste und das zweite Getriebe eingerichtet, die erste Spindelmutter und die zweite Spindelmutter gleichsinnig, bevorzugt nur jeweils eine der Spindelmuttern, zur Drehung anzutreiben. Das erste Getriebe kann aus einem ersten Antriebsritzel und der ersten Spindelmutter bestehen, das zweite Getriebe aus einem zweiten Antriebsritzel und der zweiten Spindelmutter. Optional können sowohl das erste Getriebe als auch das zweite Getriebe eine gemeinsame Spindelmutter antreiben, z.B. durch jeweils ein eigenes Zahnrad des ersten Getriebes bzw. des zweiten Getriebes, die mit der gemeinsamen Spindelmutter kämmen. In dieser Ausführungsform werden die erste und die zweite Spindelmutter durch eine gemeinsame Spindelmutter gebildet.

Auch in der zweiten Ausführungsform ist die erste Spindelmutter generell ortsfest im Gehäuse gelagert, z.B. mit Wälzlagern, die eine Bewegung der ersten Spindelmutter entlang der Längsachse der Gewindespindel verhindert. Bevorzugt ist ein Kraftsensor am Gehäuse angeordnet, der eingerichtet ist, die parallel zur Längsachse der Gewindespindel wirkende Kraft aufzunehmen, die zwischen der ersten Spindelmutter und dem Gehäuse auftritt. Ein solcher Kraftsensor kann z.B. zwischen dem Wälzlager, mit dem die erste Spindelmutter ortsfest und drehbar am Gehäuse gelagert ist, und dem Gehäuse angeordnet sein. Auch die zweite Spindelmutter ist generell ortsfest im Gehäuse gelagert, z.B. mit Wälzlagern, die eine Bewegung der zweiten Spindelmutter entlang der und quer zur Längsachse der Gewindespindel verhindern.

In der ersten und in der zweiten Ausführungsform weist der Bremsaktuator genau einen Elektromotor auf, der eine Antriebswelle antreibt, mit der das erste Getriebe und das zweite Getriebe koppelbar sind.

In einer dritten Ausführungsform ist die Gewindespindel von einem ersten Antriebszahnrad, das eine erste Spindelmutter ist, angetrieben, die einen ersten Gewindetrieb bildet, und von einem zweiten Antriebszahnrad, das eine zweite Spindelmutter bildet, die einen zweiten Gewindetrieb bildet, wobei jede Spindelmutter von einem separaten Elektromotor angetrieben ist. Bevorzugt ist ein erstes Getriebe zwischen dem ersten Elektromotor und der ersten Spindelmutter angeordnet und ein zweites Getriebe zwischen dem zweiten Elektromotor und der zweiten Spindelmutter. In dieser Ausführungsform kann zumindest eines dieser Getriebe, optional jedes, eine Kupplung zwischen dem jeweils antreibenden Elektromotor und der davon angetriebenen Spindelmutter aufweisen, wobei die Kupplung eine Rutschkupplung sein kann und alternativ vorzugsweise die Kupplung gesteuert schaltbar ist, z.B. abhängig von einem Signal eines der Sensoren und/oder abhängig von einem Steuersignal für das Schließen oder Öffnen der Bremszange bzw. des Bremsaktuators zu steuern. Bei jeweils einer Kupplung zwischen jeder der Spindelmuttern und dem sie antreibenden Elektromotor sind die Kupplungen bevorzugt gesteuert, dass nur jeweils eine der Kupplungen zur Kraftübertragung geschlossen ist und die andere offen ist. Das erste Getriebe kann optional eine größere Übersetzung als das zweite Getriebe haben, so dass das erste Getriebe eingerichtet ist, die erste Spindelmutter langsamer zu drehen, als das zweite Getriebe eingerichtet ist, die zweite Spindelmutter zu drehen. Der zweite Elektromotor weist bevorzugt eine vom ersten Motor abweichende Kraft-Weg-Charakteristik auf, so dass für jeden Betriebszustand eine optimale Kraft-Weg-Charakteristik vorhanden ist. Generell kann der zweite Elektromotor eingerichtet sein, zumindest doppelt so schnell zu drehen, wie der erste Elektromotor, und/oder der erste Elektromotor kann eingerichtet sein, zumindest doppelt so stark zu sein, wie der zweite Elektromotor. Auch in dieser Ausführungsform können die erste und die zweite Spindelmutter von einer gemeinsamen Spindelmutter gebildet sein, wobei das erste und das zweite Getriebe jeweils z.B. durch jeweils ein eigenes Zahnrad mit der gemeinsamen Spindelmutter gekoppelt sind.

In der dritten Ausführungsform ist die Gewindespindel längsverschieblich und drehfest geführt, z.B. wie in der zweiten Ausführungsform. Bevorzugt ist das erste Ende der Gewindespindel drehfest an einem Arm einer Bremszange angebracht, z.B. mittels eines drehfest am ersten Ende der Gewindespindel angebrachten Stempels, der nur um eine Achse senkrecht zur Gewindespindel drehbar an einer Bremszange angelenkt ist.

Generell bevorzugt sitzt ein Wellenritzel, das mit einer Antriebswelle verbunden ist, auf der Antriebswelle, direkt oder optional mit einer Kupplung zwischen Antriebswelle und Wellenritzel, das Teil eines Getriebes ist.

Generell bevorzugt weist der Bremsaktuator einen von außerhalb des Gehäuses zugänglichen elektrischen Taster auf, der mit der Steuereinheit verbunden ist, die eingerichtet ist, nach Betätigen des Tasters zumindest einen der Elektromotoren anzusteuern, dass die Gewindespindel in das Gehäuse bewegt wird, um den Bremsaktuator in eine Stellung zu bewegen, in der die Bremszange geöffnet ist, z.B. für den Austausch der Bremsbeläge.

Generell bevorzugt weist der Bremsaktuator, insbesondere innerhalb seines Gehäuses, eine Batterie auf, mit deren Strom die Steuerung betrieben und der zumindest eine Elektromotor angetrieben werden kann.

Der Bremsaktuator kann dadurch eine Verschleißnachstellung aufweisen, dass das Signal eines Wegsensors für den Weg der Gewindespindel während der Betätigung der Bremse, bevorzugt auch das Signal eines Kraftsensors, an die Steuereinheit übermittelt wird und die Gewindespindel abhängig vom Signal für den Weg und/oder vom Signal des Kraftsensors durch einen der Elektromotoren unter Steuerung durch die Steuereinheit angetrieben wird.

Die Erfindung wird nun genauer mit Bezug auf die Figuren beschrieben, die schematisch in
- Fig. 1 eine erste Ausführungsform,
- Fig. 2 eine zweite Ausführungsform,
- Fig. 3 eine dritte Ausführungsform,
- Fig. 4 den Verlauf der vom Bremsaktuator erzeugten Kraft gegenüber der Geschwindigkeit der Gewindespindel entlang ihrer Längsachse,
- Fig. 5 eine Ausführungsform des ersten Antriebszahnrads und des zweiten Antriebszahnrads, die von einer gemeinsamen Spindelmutter gebildet sind,
- Fig. 6 eine Ausführungsform einer Notlösevorrichtung, und in
- Fig. 7 eine Ausführungsform der drehfesten Führung der Gewindespindel am Gehäuse zeigen.

In den Figuren bezeichnen gleiche Bezugsziffern funktionsgleiche Elemente. Elemente der Ausführungsformen, die in einer Ausführungsform nicht ausdrücklich anders beschrieben sind, können dieselben sein wie sie mit Bezug auf eine andere Ausführungsform beschrieben sind.

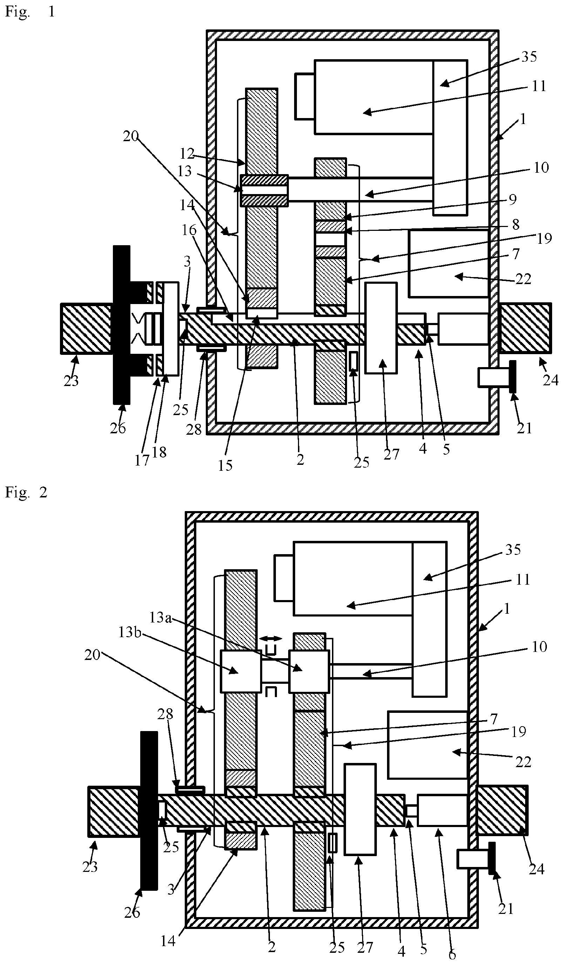

Die Fig. 1 zeigt eine erste Ausführungsform des Bremsaktuators, bei der ein Gehäuse 1 eine im Gehäuse 1 längsverschieblich angeordnete Gewindespindel 2 umfasst, deren erstes Ende 3 das Gehäuse 1 überragt und zur Befestigung an einer Bremszange vorgesehen ist. Im Bereich ihres dem ersten Ende 3 gegenüberliegenden zweiten Endes 4 weist die Gewindespindel 2 optional eine zylindrische axiale Bohrung zur Aufnahme des Positionsgebers 5 des Wegsensors 6 auf. Bevorzugt ist der Wegsensor 6 am zweiten Ende 4 der Gewindespindel 2 angeordnet.

Ein erstes Antriebszahnrad 7, hier von einer ersten Spindelmutter gebildet, steht im Gewindeeingriff mit der Gewindespindel 2 und bildet einen Gewindetrieb mit einem ersten Getriebe 19, das ein mit dem ersten Antriebszahnrad 7 kämmendes Umkehrritzel 8 aufweist, das von einem ersten Wellenritzel 9 angetrieben ist. Das erste Wellenritzel 9 sitzt auf der Antriebswelle 10, die von einem genau einem Elektromotor 11 angetrieben ist, wobei der Elektromotor 11 wie bevorzugt durch ein Motorgetriebe 35 mit der Antriebswelle 10 gekoppelt ist. Wie hier dargestellt ist, kann das erste Wellenritzel 9 direkt auf der Antriebswelle 10 sitzen. Auf derselben Antriebswelle 10 sitzt ein über eine Kupplung 13 angebrachtes zweites Wellenritzel 12. Das zweite Wellenritzel 12 treibt das zweite Antriebszahnrad 14, hier von einem Stegritzel gebildet, das eine durchgehende axiale Bohrung mit zumindest einem Steg 15 aufweist, der in eine längs der Gewindespindel 2 verlaufenden Nut 16 drehfest und längsverschieblich eingreift. Am ersten Ende 3 der Gewindespindel 2 ist eine Kupplung 17 angebracht, die bei Belastung des ersten Endes 3 der Gewindespindel 2 in Richtung auf ihr zweites Ende 4, z.B. durch Belastung der Gewindespindel 2 gegen einen Arm einer Bremszange, die Drehung der Gewindespindel 2 bremst oder stoppt. Wie hier dargestellt, kann die Kupplung 17 eine kraft- oder eine formschlüssig eingreifende Kupplung mit ineinandergreifenden Zähnen 18 sein, die bei Druckbelastung die Drehung der Gewindespindel 2 blockiert. Die Gewindespindel 2 ist wie generell bevorzugt, längsverschieblich in einer Führung 28 geführt, die am Gehäuse 1 angebracht ist. Die gegenüber dem zweiten Getriebe 20 größere Übersetzung des ersten Getriebes 19 ist durch die Durchmesser des ersten Wellenritzels 9, des Umkehrritzels 8 und des ersten Antriebszahnrads 7 bzw. der ersten Spindelmutter 7 dargestellt, wobei das zweite Antriebszahnrad 14, hier als Stegritzel ausgeführt, einen kleineren Durchmesser aufweist als das erste Antriebszahnrad 7 (Spindelmutter 7), beide zwischen der Gewindespindel 2 und der dazu parallelen gemeinsamen Antriebswelle 10 angeordnet.

Ein am Gehäuse 1 angebrachter Taster 21 dient zur manuellen Ansteuerung der Steuereinheit 22, um den Elektromotor 11 zur Drehung der Gewindespindel 2 in Richtung auf ihr zweites Ende 4 anzusteuern, so dass das erste Ende 3 der Gewindespindel in geringerem Maße über das Gehäuse 1 ragt und eine Bremszange öffnet.

Generell bevorzugt ist ein erster Arm 23 einer Bremszange mit dem ersten Ende 3 der Gewindespindel 2, insbesondere einer daran angebrachten Kupplung 17, angelenkt oder festgelegt, und ein zweiter Arm 24 der Bremszange am Gehäuse 1.

Die Notlösevorrichtung 27 ist eine von außerhalb des Gehäuses manuell zu betätigende Antriebsvorrichtung, die z.B. die Spindel in Drehung versetzt, z.B. über Längsnuten in der Spindel, wie sie für den Antrieb durch das Stegritzel vorgesehen sind.

Die Fig. 2 zeigt eine zweite Ausführungsform des Bremsaktuators mit einem ersten Getriebe 19, das als erstes Antriebszahnrad 7 eine erste Spindelmutter 7 aufweist, die im Gewindeeingriff mit der Gewindespindel 2 steht und einen ersten Gewindetrieb bildet, und mit einem zweiten Getriebe 20, das ein zweites Antriebszahnrad 14, hier eine zweite Spindelmutter 14 antreibt, die im Gewindeeingriff mit der Gewindespindel 2 steht und einen zweiten Gewindetrieb bildet. Das erste Getriebe 19 und das zweite Getriebe 20 sind von einer gemeinsamen Antriebswelle 10 angetrieben und drehen die erste Spindelmutter 7 und die zweite Spindelmutter 14 gleichsinnig. Das erste Getriebe 19 weist ein erstes Wellenritzel 9 auf, das mit einer ersten Kupplung 13a mit der Antriebswelle 10 verbunden ist. Das zweite Getriebe 20 weist ein zweites Wellenritzel 12 auf, das mittels einer zweiten Kupplung 13b mit der Antriebswelle 10 verbunden ist. Die erste Kupplung 13a und die zweite Kupplung 13b sind mechanisch oder bevorzugt elektromagnetisch schaltbar und insbesondere durch die Steuereinheit 22 gesteuert, z.B. dass nur eine von erster und zweiter Kupplung 13a, 13b geschlossen ist, um nur eines der Wellenritzel 9, 12 drehfest mit der Antriebswelle 10 zu verbinden und mit dieser anzutreiben, während das andere Wellenritzel 12, 9 nicht drehfest mit der Antriebswelle verbunden ist. Die erste Spindelmutter 7 des ersten Getriebes 19 ist drehbar im Gehäuse gelagert, wobei wie generell bevorzugt ein Kraftsensor 25 zwischen der ersten Spindelmutter 7 und dem Gehäuse 1 angeordnet ist, um die Kraft aufzunehmen, mit der die erste Spindelmutter 7 gegen das Gehäuse 1 belastet wird, und ein Messsignal dafür an die Steuereinheit 22 zu übermitteln. Dabei kann das Messsignal des Kraftsensors 25 ein Maß für die von dem Bremsaktuator erzeugte Bremskraft bilden. Alternativ kann ein Kraftsensor 25 am ersten Ende 3 der Gewindespindel 2 angebracht sein, z.B. an einem Stempel 26, der mit dem ersten Ende 3 der Gewindespindel 2 verbunden ist.

In dieser Ausführungsform ist die Gewindespindel 2 drehfest, z.B. durch drehfeste Anlenkung an einem Arm einer Bremszange, wobei bevorzugt das erste Ende 3 der Gewindespindel 2 drehfest an einem ersten Arm 23 einer Bremszange angebracht ist, z.B. mittels eines am ersten Ende 3 der Gewindespindel 2 festgelegten Stempels 26, der nur senkrecht zur Längsachse der Gewindespindel 2 schwenkbar an einer Bremszange angelenkt ist.

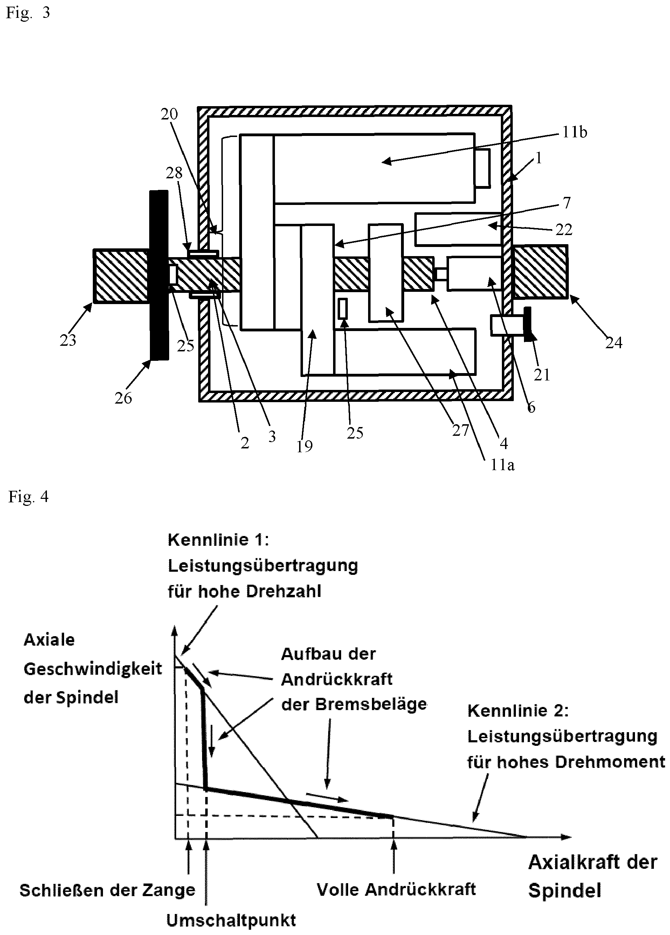

Die Fig. 3 zeigt eine dritte Ausführungsform, in der das erste Getriebe 19 ein als Spindelmutter ausgebildetes erstes Antriebszahnrad 7 aufweist, die im Gewindeeingriff mit der Gewindespindel 2 steht und einen ersten Gewindetrieb bildet, und mit einem zweiten Getriebe 20, das ein zweites Antriebszahnrad 14, das als zweite Spindelmutter 14 ausgebildet ist, aufweist, die im Gewindeeingriff mit der Gewindespindel 2 steht und einen zweiten Gewindetrieb bildet. Das erste Getriebe 19 ist von einem ersten Elektromotor 11a angetrieben, das zweite Getriebe 20 von einem zweiten Elektromotor 11b, die bevorzugt von einer Steuereinheit 22 gesteuert sind. Bevorzugt ist in jedem von erstem Getriebe 19 und zweiten Getriebe 20 eine Kupplung, bevorzugt von der Steuereinheit 22 gesteuert, oder ein Freilauf angebracht, um jeweils nur eines von erstem und zweitem Getriebe 19, 20 in eine kraftschlüssige Verbindung des ersten und zweiten Elektromotors 11a, 11b zur Gewindespindel zu bringen. Wie mit Bezug auf die zweite Ausführungsform beschrieben ist die Gewindespindel 2 drehfest geführt, z.B. mittels eines an ihrem ersten Ende 3 angebrachten Stempels 26 drehfest mit einem ersten Arm 23 einer Bremszange verbindbar. Alternativ kann die Gewindespindel 2 längsverschieblich und drehfest in einer Führung 28 geführt sein, die am Gehäuse 1 festgelegt ist.

Die Figur 4 zeigt den Verlauf der von dem Bremsaktuator erzeugten Kraft X zur Geschwindigkeit Y der Gewindespindel 2 entlang ihrer Längsachse. Das zweite Getriebe 20 ist generell eingerichtet, die Gewindespindel 2 mit größerer Geschwindigkeit entlang ihrer Längsachse zu bewegen als das erste Getriebe 19. Das erste Getriebe 19 ist generell eingerichtet, die Gewindespindel 2 mit größerer Kraft entlang ihrer Längsachse zu bewegen als das zweite Getriebe 20. Daher ist der Bremsaktuator eingerichtet, zum Schließen einer Bremszange mittels des zweiten Getriebes 20 die Gewindespindel 2 mit geringer Kraft und mit großer Geschwindigkeit in Richtung auf ihr erstes Ende 3 zu bewegen, bis die Gewindespindel 2 gegen ihr erstes Ende 3 belastet wird. Dies kann z.B. durch ein Messsignal eines Kraftsensors 25 als steiler Anstieg der Last gemessen und an die Steuereinheit 22 übermittelt werden. Der Bremsaktuator ist eingerichtet, bei dieser Belastung bzw. dem Anstieg der Belastung die Gewindespindel mittels des ersten Getriebes 19 weiter in Richtung auf ihr erstes Ende 3 zu bewegen, wobei die axiale Geschwindigkeit der Gewindespindel langsamer wird und die Kraft zunimmt. Das erste Getriebe 19 baut die Bremskraft auf, wobei die geringe axiale Geschwindigkeit der Gewindespindel eine präzise Dosierung der Kraft ermöglicht. In der ersten Ausführungsform wird der Umschaltpunkt zwischen der schnellen axialen Bewegung durch das zweite Getriebe 20 und der langsameren axialen Bewegung mit höherer Kraft durch das erste Getriebe 19 durch das Lösen den Kupplung 13, insbesondere Durchrutschen der als Rutschkupplung ausgebildeten Kupplung 13 bestimmt, die zwischen der Antriebswelle 10 und dem zweiten Getriebe 20, insbesondere dem zweiten Wellenritzel 12 angeordnet ist. In der zweiten Ausführungsform wird der Umschaltpunkt zwischen der schnellen axialen Bewegung durch das zweite Getriebe 20 und der langsameren axialen Bewegung mit höherer Kraft durch das erste Getriebe 19 durch das Lösen der zweiten Kupplung 13b und das Schließen bzw. Eingreifen der ersten Kupplung 13a bestimmt. In der dritten Ausführungsform wird der Umschaltpunkt zwischen der schnellen axialen Bewegung durch das zweite Getriebe 20 und der langsameren axialen Bewegung mit höherer Kraft durch das erste Getriebe 19 durch das Abstellen des zweiten Elektromotors 11b, der das zweite Getriebe antreibt, und das Anstellen des ersten Elektromotors 11a bestimmt, der das erste Getriebe 19 antreibt.

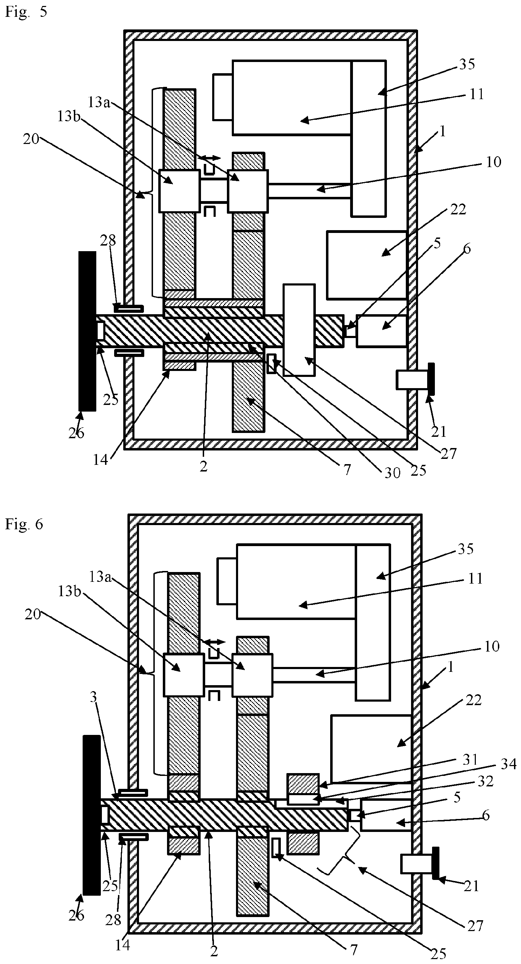

Die Fig. 5 zeigt am Beispiel der zweiten Ausführungsform, auch stellvertretend für die dritte Ausführungsform, dass das erste Getriebe 19 und das zweite Getriebe 20 auf eine gemeinsame Spindelmutter 30 wirken, die das erste und das zweite Antriebszahnrad 7, 14 bildet. Durch den mittels der ersten Kupplung 13a bzw. zweiten Kupplung 13b jeweils getrennten Antrieb des ersten und zweiten Getriebes 19, 20 ist nur eines von erstem und zweitem Getriebe 19, 20 durch die Antriebswelle 10 angetrieben. In der dritten Ausführungsform erfolgt der getrennte Antrieb des ersten und zweiten Getriebes 19, 20 durch jeweils einen Elektromotor 11a, 11b.

Die Fig. 6 zeigt am Beispiel der zweiten Ausführungsform, auch stellvertretend für die dritte Ausführungsform, eine Ausführung einer erfindungsgemäß bevorzugten Notlösevorrichtung 27, die ein Stegritzel 31 aufweist, dessen innenliegender Steg in längsverschieblichem Eingriff mit einer längs der Gewindespindel 2 verlaufenden Nut 32 steht. Die Nut 32 erstreckt sich z.B. am zweiten Ende 4 der Gewindespindel, alternativ an deren erstem Ende 3. Die die Gewindespindel 2 ist mittels ihrer Nut 32 am Stegritzel 31 längsverschieblich, so dass bei Drehung des Stegritzels 31 die Gewindespindel 2 gedreht wird und die Gewindespindel in einer Spindelmutter, die von einem ersten Antriebszahnrad 7 oder einem zweiten Antriebszahnrad 14 gebildet wird, oder in einer gemeinsamen Spindelmutter, verschoben wird. Das Stegritzel 31 kann manuell zu betätigen sein, z.B. mittels eines Kurbelantriebs, oder mittels eines separaten Elektromotors, der bevorzugt unabhängig von Bordstrom von einer Batterie angetrieben wird, z.B. mittels eines Tasters 21 anzusteuern.

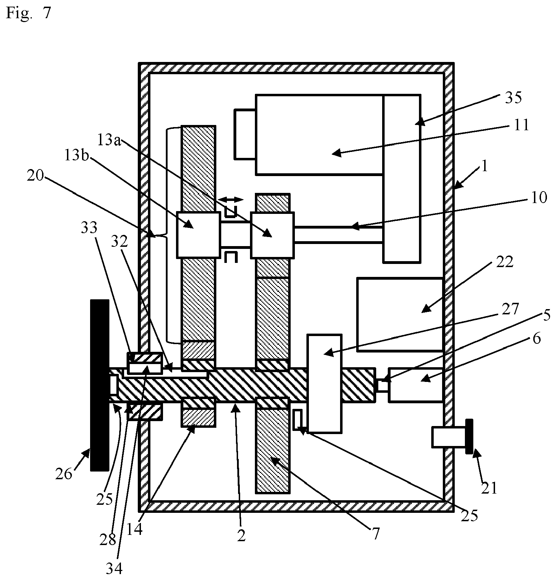

Die Fig. 7 zeigt am Beispiel der zweiten Ausführungsform, auch stellvertretend für die dritte Ausführungsform, eine Ausführung für eine Führung 28 der Gewindespindel 2 am Gehäuse in Form einer Steghülse 33, die die Gewindespindel an deren erstem Ende 3 umfasst, wobei ein im Innern der Steghülse 33 angeordneter Steg 34 längsverschieblich in eine längs der Gewindespindel 2 verlaufende Nut 32 eingreift. Die Steghülse 33 führt die Gewindespindel 2 drehfest und längsverschieblich, so dass ein als erste Spindelmutter ausgebildetes erstes Antriebszahnrad 7 oder ein als zweite Spindelmutter ausgebildetes zweites Antriebszahnrad 14 jeweils einen Drehantrieb mit der in der Steghülse 33 geführten Gewindespindel 2 bilden.

### Bezugszeichen:

| | | | |
|---|---|---|---|
| 1 | Gehäuse | 16 | Nut längs der Gewindespindel |
| 2 | Gewindespindel | 17 | Kupplung |
| 3 | erstes Ende der Gewindespindel | 18 | Zähne |
| 4 | zweites Ende der Gewindespindel | 19 | erstes Getriebe |
| 5 | Positionsgeber | 20 | zweites Getriebe |
| 6 | Wegsensor | 21 | Taster |
| 7 | erstes Antriebszahnrad | 22 | Steuereinheit |
| 8 | Umkehrritzel | 23 | erster Arm einer Bremszange |
| 9 | erstes Wellenritzel | 24 | zweiter Arm einer Bremszange |
| 10 | Antriebswelle | 25 | Kraftsensor |
| 11 | Elektromotor | 26 | Stempel |
| 11a | erster Elektromotor | 27 | Notlösevorrichtung |
| 11b | zweiter Elektromotor | 28 | Führung |
| 12 | zweites Wellenritzel | 30 | gemeinsame Spindelmutter |
| 13 | Kupplung | 31 | Stegritzel |
| 13a | erste Kupplung | 32 | Nut |
| 13b | zweite Kupplung | 33 | Steghülse |
| 14 | zweites Antriebszahnrad | 34 | Steg |
| 15 | Steg | 35 | Motorgetriebe |

## Patentansprüche

1. Bremsaktuator mit rein elektrischem Antrieb zur Verwendung an einer Bremszange, insbesondere für Schienenfahrzeuge, mit
- einer Gewindespindel (2), deren erstes Ende (3) mit einer Bremszange verbindbar ist und deren gegenüberliegendes zweites Ende (4) längsverschieblich in einem Gehäuse (1) geführt ist,
- ein mit der Gewindespindel (2) in Eingriff stehendes erstes Antriebszahnrad (7), das drehbar und ortsfest im Gehäuse (1) gelagert ist,
- ein mit der Gewindespindel (2) in Eingriff stehendes zweites Antriebszahnrad (14),
- mit zumindest einem ersten Getriebe (19), das den zumindest einen Elektromotor (11) mit dem ersten Antriebszahnrad (7) verbindet und
- mit einem zweiten Getriebe (20), das den zumindest einen Elektromotor (11) mit dem zweiten Antriebszahnrad (14) verbindet.

2. Bremsaktuator nach Anspruch 1, **dadurch gekennzeichnet, dass** das erste Getriebe (19) und das zweite Getriebe (20) von einer gemeinsamen Antriebswelle (10) angetrieben sind, die von genau einem Elektromotor (10) angetrieben ist und dadurch, dass eine Kupplung (13), die eine Rutschkupplung oder eine schaltbare Kupplung ist, zwischen der gemeinsamen Antriebswelle und dem zweiten Antriebszahnrad (14) angeordnet ist.

3. Bremsaktuator nach einem der voranstehenden Ansprüche, **dadurch gekennzeichnet, dass** das zweite Getriebe (20) ein mit der vom Elektromotor (11) angetriebenen Antriebswelle (10) verbundenes zweites Wellenritzel (12) aufweist und eine Kupplung (13) zwischen der Antriebswelle (10) und dem zweiten Wellenritzel (12) angeordnet ist.

4. Bremsaktuator nach einem der voranstehenden Ansprüche, **dadurch gekennzeichnet, dass** das erste Antriebszahnrad (7) als Spindelmutter ausgebildet ist, die einen Gewindetrieb mit der Gewindespindel (2) bildet und dass das zweite Antriebszahnrad (14) ein Stegritzel ist, das eine Bohrung mit zumindest einem Steg (15) aufweist, der drehfest und längs der Gewindespindel (2) verschieblich mit zumindest einer längs der Gewindespindel (2) verlaufenden Nut (16) in Eingriff steht, und dass eine Kupplung (13) zwischen dem zweiten Getriebe (20) und dem Elektromotor (11) angeordnet ist.

5. Bremsaktuator nach einem der voranstehenden Ansprüche, **dadurch gekennzeichnet, dass** das erste Getriebe (19) ein auf einer Antriebswelle (10) fest angebrachtes erstes Wellenritzel (9) aufweist und dass das erste Getriebe (19) eingerichtet ist, das erste Antriebszahnrad (7) in einem Drehsinn anzutreiben und das zweite Getriebe (20) eingerichtet ist, das zweite Antriebszahnrad (14) im gegenläufigen Drehsinn anzutreiben.

6. Bremsaktuator nach einem der Ansprüche 1 bis 3, **dadurch gekennzeichnet, dass** das erste Antriebszahnrad (7) eine erste Spindelmutter ist, die einen Gewindetrieb mit der Gewindespindel (2) bildet und dass das zweite Antriebszahnrad (14) eine zweite Spindelmutter ist, die einen Gewindetrieb mit der Gewindespindel (2) bildet, wobei das erste Getriebe (19) mit einer ersten Kupplung (13a) mit einer Antriebswelle (10) verbunden ist und das zweite Getriebe (20) mit einer zweiten Kupplung (13b) mit derselben Antriebswelle (10) verbunden ist und die erste Kupplung (13a) und die zweite Kupplung (13b) eingerichtet sind, dass nur eine dieser in kraftübertragendem Eingriff mit der Antriebswelle (10) steht.

7. Bremsaktuator nach Anspruch 6, **dadurch gekennzeichnet, dass** die erste Kupplung (13a) und die zweite Kupplung (13b) schaltbare Kupplungen sind, die von einer Steuereinheit (22) gesteuert sind.

8. Bremsaktuator nach einem der Ansprüche 6 bis 7, **dadurch gekennzeichnet, dass** das erste Antriebszahnrad (7) und das zweite Antriebszahnrad (14) von einer gemeinsamen Spindelmutter (30) gebildet sind, mit der das erste Getriebe (19) und das zweite Getriebe (20) in Eingriff stehen.

9. Bremsaktuator nach einem der voranstehenden Ansprüche, **dadurch gekennzeichnet, dass** das erste Getriebe (19) und das zweite Getriebe (20) von genau einem Elektromotor (11) angetrieben sind.

10. Bremsaktuator nach Anspruch 1 oder nach einem der Ansprüche 3 bis 9 soweit auf Anspruch 1 zurückbezogen, **dadurch gekennzeichnet, dass** das erste Getriebe (19) von einem ersten Elektromotor (11a) angetrieben ist und dass das zweite Getriebe (20) von einem zweiten Elektromotor (11b) angetrieben ist und dass der erste Elektromotor (11a) und der zweite Elektromotor (11b) von einer Steuereinheit (22) gesteuert sind, die eingerichtet ist, nur jeweils einen der Elektromotoren (11a, 11b) mit Strom zu beaufschlagen.

11. Bremsaktuator nach einem der voranstehenden Ansprüche, **dadurch gekennzeichnet, dass** die Gewindespindel (2) dadurch drehfest geführt ist, dass am ersten Ende (3) der Gewindespindel (2) ein Stempel (26) drehfest angebracht ist, der mit einem Arm (23, 24) einer Bremszange drehfest verbindbar ist.

12. Bremsaktuator nach einem der voranstehenden Ansprüche, **gekennzeichnet durch** einen Wegsensor (6), der eingerichtet ist, den Weg der Verschiebung der Gewindespindel (2) gegen das Gehäuse (1) aufzunehmen und ein Signal dafür an eine Steuereinheit (22) zu übermitteln, die eingerichtet ist, den Elektromotor (11) abhängig vom Steuersignal zu steuern.

13. Bremsaktuator nach einem der voranstehenden Ansprüche, **gekennzeichnet durch** einen Kraftsensor (25), der eingerichtet ist, die Kraft zwischen dem ersten Antriebszahnrad (7) und dem Gehäuse (1) aufzunehmen und/oder einen Kraftsensor (25), der eingerichtet ist, die Kraft zwischen der Gewindespindel (2) und einem an ihrem ersten Ende (3) angebrachten Stempel (26) aufzunehmen, wobei der Kraftsensor (25) eingerichtet ist, ein Signal für die Kraft an eine Steuereinheit (22) zu übermitteln, die eingerichtet ist, den Elektromotor (11) abhängig vom Steuersignal zu steuern.

14. Bremsaktuator nach einem der voranstehenden Ansprüche, **dadurch gekennzeichnet, dass** die Gewindespindel (2) mittels einer am Gehäuse (1) angebrachten Steghülse (33), deren Steg (34) in eine längs der Gewindespindel (2) verlaufenden Nut (32) eingreift, drehfest und längsverschieblich am Gehäuse (1) geführt ist.

15. Bremsaktuator nach einem der voranstehenden Ansprüche, **gekennzeichnet durch** einen Notlösevorrichtung, die ein Stegritzel (31) aufweist, dessen Steg (34) in eine längs der Gewindespindel (2) verlaufende Nut (32) längsverschieblich eingreift, wobei das Stegritzel (31) manuell oder durch einen Elektromotor angetrieben ist.
